(19) Europäisches Patentamt
European Patent Office
Office européen des brevets

(11) EP 4 390 602 A1

(12) EUROPEAN PATENT APPLICATION
published in accordance with Art. 153(4) EPC

(43) Date of publication:
26.06.2024 Bulletin 2024/26

(51) International Patent Classification (IPC):
*G05D 1/20* (2024.01)

(21) Application number: 23838646.0

(22) Date of filing: 16.06.2023

(86) International application number:
PCT/CN2023/100755

(87) International publication number:
WO 2024/012152 (18.01.2024 Gazette 2024/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.07.2022 CN 202210818068

(71) Applicant: Sublue Underwater AI Co., Ltd.
Tianjin 300457 (CN)

(72) Inventors:
• WEI, Jiancang
Tianjin 300457 (CN)

• GUO, Yonggang
Tianjin 300457 (CN)
• SHANG, Chunxi
Tianjin 300457 (CN)
• MA, Yubin
Tianjin 300457 (CN)
• HE, Jiyang
Tianjin 300457 (CN)

(74) Representative: Zaboliene, Reda
Metida
Business center Vertas
Gyneju str. 16
01109 Vilnius (LT)

(54) **PATH PLANNING METHOD AND APPARATUS FOR SWIMMING POOL CLEANING ROBOT**

(57) A path planning method for a swimming pool cleaning robot comprises: (a) controlling the robot to search, at a first set angle, in one or more surrounding grids around a current grid of the robot; (b)controlling the robot to move to a first uncleaned grid for cleaning and determining the first uncleaned grid as the current grid of the robot in a case that the first uncleaned grid is found in the one or more surrounding grids, and then returning to step (a); (c)determining whether path planning termination conditions are satisfied, in a case that no uncleaned grid is found in the one or more surrounding grids; (d) determining whether an accumulated rotation angle of the robot at a second set angle in the current grid reaches a full circle in a case that the path planning termination conditions are not satisfied; and (e) controlling the robot to rotate by the second set angle in a case that the accumulated rotation angle of the robot at the second set angle in the current grid does not reach a full circle, and then returning to step (a).

S101 acquiring an electronic map of the swimming pool in a grid form, wherein the electronic map comprises a plurality of grids

S102 controlling the robot to search, at a first set angle, In one or more surrounding grids around a current grid of the robot

S103 controlling the robot to move to a first uncleaned grid for cleaning and determining the first uncleaned grid as the current grid of the robot in a case that the first uncleaned grid is found in the one or more surrounding grids, and then returning to step 102

S104 determining whether path planning termination conditions are satisfied in a case that no uncleaned grid is found in the one or more surrounding grids

S105 determining whether an accumulated rotation angle of the robot at a second set angle in the current grid reaches a full circle in a case that the path planning termination conditions are not satisfied

S106 controlling the robot to rotate by the second set angle in a case that the accumulated rotation angle of the robot at the second set angle in the current grid does not reach a full circle, and then returning to step 102

S107 controlling the robot to return to a position of the previous grid and determining a previous grid as the current grid of the robot in a case that the accumulated rotation angle of the robot at the second set angle in the current grid reaches a full circle, and then returning to step 102

S108 terminating the path planning in a case that the path planning termination conditions are satisfied

FIG. 1

EP 4 390 602 A1

## Description

Technical Field

The application relates to the technical field of underwater robots, in particular to a path planning method and device for a swimming pool cleaning robot.

Background

With the rapid development of technological innovation and high-end manufacturing industries in China, the development of the robotics industry has received increasing attention from countries around the world. Major economies have elevated the development of the robotics industry to a national strategic level and regard it as an important means to maintain and regain competitiveness in the manufacturing industry. Specifically, intelligent home robots for daily use have already become an integral part of people's lives, and various types of intelligent home robots are capable of replacing manual labor for various tasks.

A swimming pool cleaning robot is an underwater robot used to clean private or public pools. Utilizing underwater robots for private or public pool cleaning can save manpower and achieve more thorough cleaning compared to manual cleaning. Therefore, using underwater robots to replace manual labor for pool cleaning is becoming a trend.

For cleaning robots, path planning methods mainly comprise random path planning and regular pool path planning. Appropriate path planning methods can be adopted based on the sensor configuration, working environment, and task characteristics.

However, the traditional underwater random path planning method is random in underwater movements, which may lead to a large number of cleaning dead zones and repetitive cleaning areas, resulting in low cleaning efficiency and unable to fully demonstrate the intelligence of robots. The regular pool path planning method has limitations in terms of its usage scope and applicability, only suitable for pools with regular shapes. In reality, pools come in various shapes, so this method is unable to meet the development of pools and user needs, and also has efficiency issues.

Summary

Based on this, the application provides a path planning method and device for a swimming pool cleaning robot. Path planning technology is the core technology and important manifestation of autonomous and smart swimming pool cleaning robots. The path planning for a mobile robot involves utilizing information about the robot and its working environment to determine an optimal collision-free path between the starting and target points, based on a specific optimization criteria. For a swimming pool cleaning robot, unlike general mobile robots, it is required to follow a certain trajectory to cover every part of the pool, while maintaining traversal and non-repetitiveness in its movement. Traversal means that the cleaning robot should cover all required cleaning areas as much as possible, directly reflecting the cleaning effectiveness. Non-repetitiveness means that the walking path of the cleaning robot should avoid repetitions as much as possible, to improve cleaning efficiency.

According to a first aspect of the application, a path planning method for a swimming pool cleaning robot is provided, comprising:

> (a) controlling the robot to search, at a first set angle, in one or more surrounding grids around a current grid of the robot;
> (b) controlling the robot to move to a first uncleaned grid for cleaning and determining the first uncleaned grid as the current grid of the robot in a case that the first uncleaned grid is found in the one or more surrounding grids, and then returning to step (a);
> (c) determining whether path planning termination conditions are satisfied in a case that no uncleaned grid is found in the one or more surrounding grids;
> (d) determining whether an accumulated rotation angle of the robot at a second set angle in the current grid reaches a full circle in a case that the path planning termination conditions are not satisfied; and
> (e) controlling the robot to rotate by the second set angle in a case that the accumulated rotation angle of the robot at the second set angle in the current grid does not reach a full circle, and then returning to step (a).

According to a second aspect of the application, a path planning device for a swimming pool cleaning robot is provided, comprising:

> a first control unit configured to control the robot to search, at a first set angle, in one or more surrounding grids around a current grid of the robot;
> a second control unit configured to control the robot to move to a first uncleaned grid for cleaning and determine the first uncleaned grid as the current grid of the robot in a case that the first uncleaned grid is found in the one or more surrounding grids;
> a first determination unit configured to determine whether path planning termination conditions are satisfied in a case that no uncleaned grid is found in the one or more surrounding grids;
> a second determination unit configured to determine whether an accumulated rotation angle of the robot at a second set angle in the current grid reaches a full circle in a case that the path planning termination conditions are not satisfied; and
> a third control unit configured to control the robot to rotate by the second set angle in a case that the accumulated rotation angle of the robot at the second set angle in the current grid does not reach a full circle.

According to a third aspect of the application, an electronic equipment is provided, comprising: a processor and a memory, the memory stores computer instructions which, when executed by the processor, cause the processor to execute the method as described in the first aspect.

According to a fourth aspect of the application, a non-transitory computer storage medium on which a computer program is stored is provided, and the computer program, when executed by processors, causes the processors to execute the method as described in the first aspect.

The solution provided in this application uses a cost-effective sensor configuration to achieve optimal path planning. It is compatible with various pool shapes, and for any given pool shape, it can generate an optimal cleaning path with high coverage and low repetition rate. Moreover, it requires no user operation or involvement, truly achieving the autonomy and intelligence of the cleaning robot.

Brief Description of the Drawings

In order to explain the technical scheme in the embodiments of the application more clearly, the drawings used in the description of the embodiments will be briefly introduced below. Obviously, the drawings in the following description are only some embodiments of the application. For those of ordinary skill in the art, other drawings can be obtained from these drawings without exceeding the scope of this application.

   Fig. 1 is a flowchart of a path planning method for a swimming pool cleaning robot according to an embodiment of the application.
   Fig. 2 is a schematic diagram of a path planning strategy for a swimming pool cleaning robot according to an embodiment of the application.
   Fig. 3 is a flowchart of the path planning strategy for a swimming pool cleaning robot shown in Fig. 2.
   Fig. 4 is a schematic diagram of a path planning device for a swimming pool cleaning robot according to an embodiment of the application.
   Fig. 5 is a structural diagram of an electronic equipment provided by the invention.

Detailed Description of Embodiments

The technical solution in the embodiments of the application will be described clearly and completely with reference to the drawings in the embodiments of the application. Obviously, the described embodiments are part of the embodiments of the application, not all of them. All other embodiments obtained by those of ordinary skill in the art based on the embodiments in this application without paying creative effort fall within the protection scope of this application.

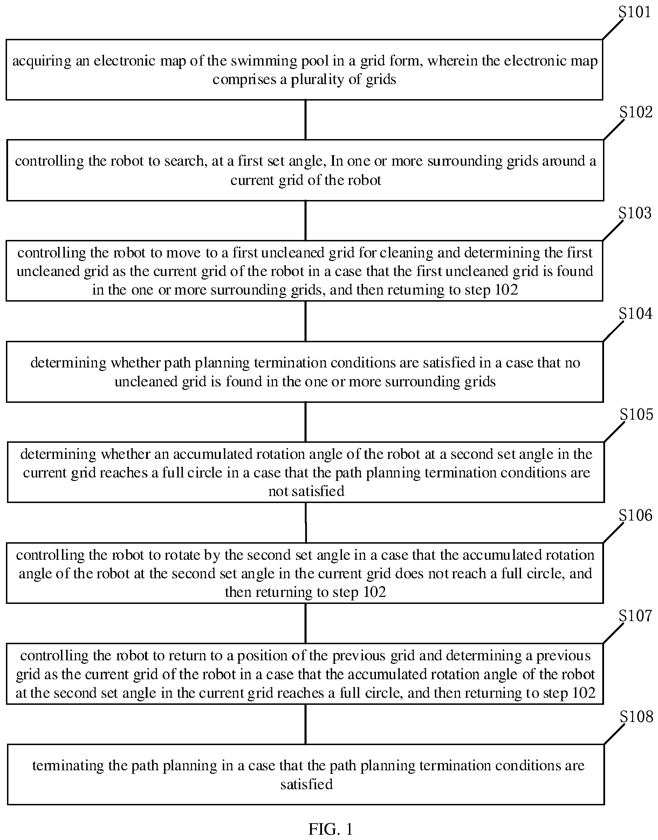

According to an aspect of the application, a path planning method for a swimming pool cleaning robot is provided. Fig. 1 is a flowchart of a path planning method for a swimming pool cleaning robot according to an embodiment of the application. As shown in Fig. 1, the method comprises the following steps.

At S101, an electronic map of the swimming pool in a grid form is acquired, wherein the electronic map comprises a plurality of grids.

The grid is the result of dividing the electronic map of the swimming pool into individual cells. Specifically, the robot utilizes its built-in distance measuring sensors such as ultrasonic or infrared sensors to perform edge learning by traversing along the pool walls. During this learning process, it captures environmental feature data and stores it in the form of an "electronic map", thereby obtaining a complete and precise representation of the working environment after completing one full circuit around the pool. Alternatively, instead of obtaining the "electronic map" of the swimming pool through the sensors of the robot, the robot can obtain "electronic map" from other devices or equipment.

The electronic map uses a grid format and discretizes the coordinates, allowing for a digital representation of the actual physical area through mapping the real pool area to the map area. In the electronic map, the pool walls are considered as obstacles, while the pool bottom represents the map area. Each grid is described by a three-dimensional state value (x, y, z), where x and y denote the grid coordinates, and z denotes the grid state. For instance, 0 represents uncleaned, and 1 represents cleaned.

The size or area of each grid can be decided based on specific requirements. In a particular embodiment, the relationship between the chosen grid spacing d and the robot's coverage area S is

$$d = \sqrt{S}/n \quad (n = 1, 2, 3, \cdots)$$

. For instance, if we want to decompose the pool into 10,000 grids, then the value of n would be 100.

At S102, the robot is controlled to search, at a first set angle, in one or more surrounding grids around a current grid of the robot.

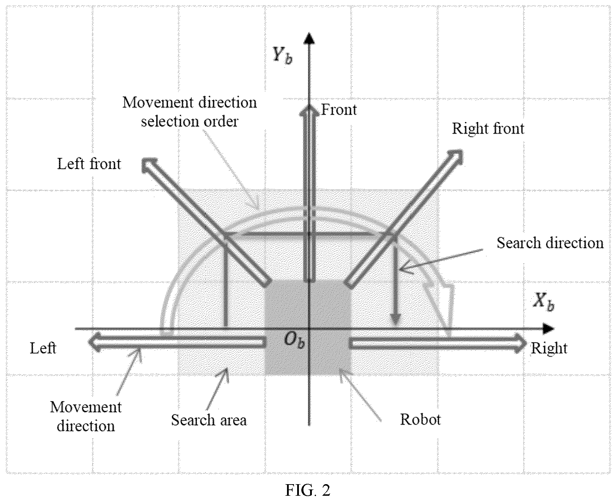

Fig. 2 is a schematic diagram of a path planning strategy for a swimming pool cleaning robot according to an embodiment of the application. In Fig. 2, $X_b O_b Y_b$ represents the robot coordinate system, where $Y_b$ points towards the front of the robot and $X_b$ points towards the right. In the robot coordinate system $X_b O_b Y_b$, the robot coordinates are (0,0). The coordinates of the grids that the robot traverses from left to right are (-1,0), (-1,1), (0,1), (1,1), (1,0) in sequence. The robot successively searches the surrounding map grids starting from the current grid by rotating at the first set angle (e.g., 180° clockwise).

It should be noted that in Fig. 2, the robot can also search the surrounding map grids by rotating counterclockwise starting from the current grid, and the first set angle can be any suitable angle, which is not limited by this application.

Additionally, the robot can also search grids beyond the immediate surrounding grids. In this way, the one or more surrounding grids around the current grid of the robot comprise n layers of grids around the current grid of the robot, and an $x^{th}$ layer of grids surround an $x-1^{th}$ layer of grids, where $n \geq 2$ and $1 \leq x \leq n$. Step S102 comprises: in a case that no uncleaned area is found in the $x-1^{th}$ layer of grids, controlling the robot to search in the $x^{th}$ layer of grids at the first set angle.

In addition to searching the five grids with coordinates (-1,0), (-1,1), (0,1), (1,1), and (1,0) in Fig. 2, it is also possible to search additional 9 outer grids or 13 outer grids.

At S103, in a case that a first uncleaned grid is found in the one or more surrounding grids, the robot is controlled to move to the first uncleaned grid for cleaning, the first uncleaned grid is determined as the current grid of the robot, and then step 102 is executed again.

As shown in Fig. 2, the robot rotates clockwise 180° from the current grid to sequentially search the surrounding map grids. It stops searching when encountering uncleaned areas and moves from the current grid to the unclean grid for cleaning. After completing the cleaning, it repeats the search process.

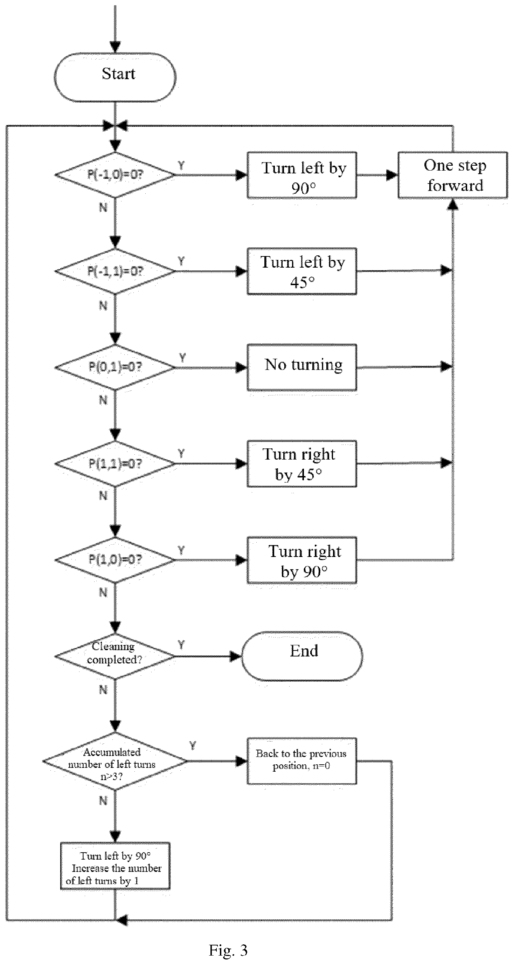

As shown in Fig. 3, when the grid with coordinates (-1,0) is not cleaned, the robot turns left by 90°, and moves to the grid with coordinates (-1,0) for cleaning. Then, the grid with coordinates (-1,0) is determined as the current grid of the robot. When the grid with coordinates (-1,1) is not cleaned, the robot turns left by 45° and moves to the grid with coordinates (-1,1) for cleaning. Then, the grid with coordinates (-1,1) is determined as the current grid of the robot. When the grid with coordinates (0,1) is not cleaned, the robot does not turn and moves to the grid with coordinates (0,1) for cleaning. Then, the grid with coordinates (0,1) is determined as the current grid of the robot. When the grid with coordinates (1,1) is not cleaned, the robot turns right by 45° and moves to the grid with coordinates (1,1) for cleaning. Then, the grid with coordinates (1,1) is determined as the current grid of the robot. When the grid with coordinates (1,0) is not cleaned, the robot turns right by 90° and moves to the grid with coordinates (1,0) for cleaning. Then, the grid with coordinates (1,0) is determined as the current grid of the robot.

At S104, in a case that no uncleaned grid is found in the one or more surrounding grids, whether path planning termination conditions are satisfied is determined.

To determine whether to continue path planning when no uncleaned grids are found in the one or more surrounding grids of the current grid, it is necessary to examine whether the path planning termination conditions are met. The path planning termination conditions comprise that an area covered by path planning reaches a preset value of a map area and/or the path planning cannot proceed further.

At S105, in a case that the path planning termination conditions are not satisfied, whether an accumulated rotation angle of the robot at a second set angle in the current grid reaches a full circle is determined.

At S106, in a case that the accumulated rotation angle of the robot at the second set angle in the current grid does not reach a full circle, the robot is controlled to rotate by the second set angle, and then step 102 is executed again.

At S107, in a case that the accumulated rotation angle of the robot at the second set angle in the current grid reaches a full circle, the robot is controlled to return to a position of a previous grid, the previous grid is determined as the current grid of the robot, and then step 102 is executed again.

As shown in Figs. 2 and 3, if the path planning termination conditions are not met, the robot can be rotated by the second set angle (for example, rotated left by 90°) for search. If no uncleaned area is found, the robot can continue to rotate by the second set angle until the accumulated rotation angle of the robot at the second set angle in the current grid reaches a full circle. After the accumulated rotation angle of the robot at the second set angle in the current grid reaches a full circle and no uncleaned area is found, the robot can be returned to a position of a previous grid, and the previous grid is determined as the current grid of the robot. Then, proceed to step 102 to continue the search.

As shown in Fig. 3, the second set angle is 90°. Once the robot completes 4 rotations at the second set angle, it implies that the accumulated rotation angle of the robot at the second set angle in the current grid reaches a full circle. In this way, step S105 comprises: counting a number of times that the robot rotates at the second set angle in the current grid; and based on the second set angle and the number of times the robot rotates at the second set angle, determining whether the accumulated rotation angle of the robot at the second set angle in the current grid reaches a full circle.

It should be noted that in Fig. 2, the robot can also rotate clockwise in the current grid, the second set angle can be any suitable angle, and the second set angle for each rotation can be the same or different, which is not limited by this application.

At S108, in a case that the path planning termination conditions are satisfied, the path planning is terminated.

As mentioned above, the path planning termination conditions comprise that an area covered by path planning reaches a preset value of a map area and/or the path planning cannot proceed further. The area covered by path planning reaching the preset value of the map area comprises that a ratio of a total area of grids cleaned by the robot to an area of a swimming pool reaches a preset value, for example, when the ratio reaches 95%, it is determined that the path planning is terminated. The situation that the path planning cannot proceed further comprises that a number of times that the robot continuously returns to a position of a previous grid reaches a preset threshold, for example, when the number of times reaches 5, it is determined that the path planning is terminated.

In a case that the path planning termination conditions comprise that a ratio of a total area of grids cleaned by the robot to an area of a swimming pool reaches a preset value, the method shown in Fig. 1 further comprises: setting a status of the grid cleaned by the robot as cleaned; counting the number of grids with the status set as cleaned; and calculating a ratio of the number of cleaned grids to the total number of grids in the swimming pool. By comparing this ratio with the preset value, whether the path planning termination conditions are met can be determined.

Those skilled in the art can understand that the preset value and the number of consecutive returns can be set according to actual needs.

According to the path planning method for a swimming pool cleaning robot provided by the application, the cleaning rate of the swimming pool cleaning robot can be greatly improved, the repetition rate of cleaning is greatly reduced, and the working efficiency of the cleaning robot is improved, so that the cleaning robot is more autonomous and smarter and can generate higher economic and social benefits.

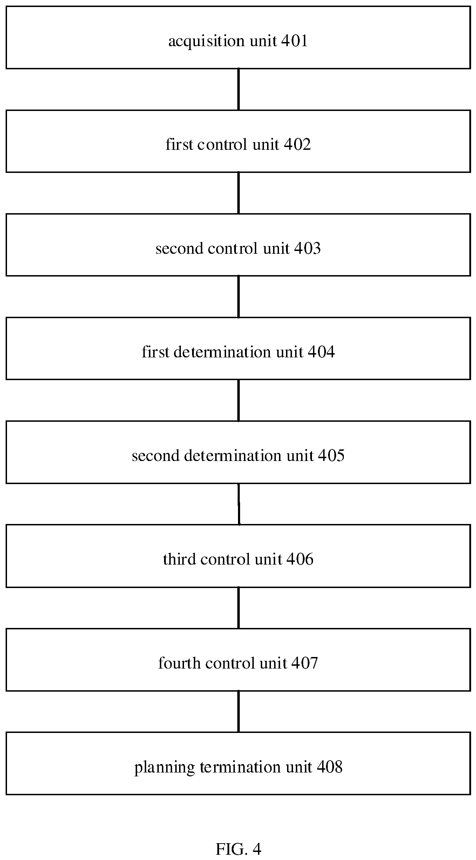

According to another aspect of the application, a path planning device for a swimming pool cleaning robot is provided. Fig. 4 is a schematic diagram of a path planning device for a swimming pool cleaning robot according to an embodiment of the application. As shown in Fig. 4, the device comprises the following units.

An acquisition unit 401 is configured to acquire an electronic map of the swimming pool in a grid form, wherein the electronic map comprises a plurality of grids.

The grid is the result of dividing the electronic map of the swimming pool into individual cells. Specifically, the robot utilizes its built-in distance measuring sensors such as ultrasonic or infrared sensors to perform edge learning by traversing along the pool walls. During this learning process, it captures environmental feature data and stores it in the form of an "electronic map", thereby obtaining a complete and precise representation of the working environment after completing one full circuit around the pool. Alternatively, instead of obtaining the "electronic map" of the swimming pool through the sensors of the robot, robot can obtain the "electronic map" from other devices or equipment.

The electronic map uses a grid format and discretizes the coordinates, allowing for a digital representation of the actual physical area through mapping the real pool area to the map area. In the electronic map, the pool walls are considered as obstacles, while the pool bottom represents the map area. Each grid is described by a three-dimensional state value (x, y, z), where x and y denote the grid coordinates, and z denotes the grid state. For instance, 0 represents uncleaned, and 1 represents cleaned.

The size or area of each grid can be decided based on specific requirements. In a particular embodiment, the relationship between the chosen grid spacing d and the robot's coverage area S is

$$d = \sqrt{S}/n \ (n = 1, 2, 3, \cdots)$$

. For instance, if we want to decompose the pool into 10,000 grids, then the value of n would be 100.

A first control unit 402 is configured to control the robot to search, at a first set angle, in one or more surrounding grids around a current grid of the robot.

Fig. 2 is a schematic diagram of a path planning strategy for a swimming pool cleaning robot according to an embodiment of the application. In Fig. 2, $X_b O_b Y_b$ represents the robot coordinate system, where $Y_b$ points towards the front of the robot and $X_b$ points towards the right. In the robot coordinate system $X_b O_b Y_b$, the robot coordinates are (0,0). The coordinates of the grids that the robot traverses from left to right are (-1,0), (-1,1), (0,1), (1,1), (1,0) in sequence. The robot successively searches the surrounding map grids starting from the current grid by rotating at the first set angle (e.g., 180° clockwise).

It should be noted that in Fig. 2, the robot can also search the surrounding map grids by rotating counterclockwise starting from the current grid, and the first set angle can be any suitable angle, which is not limited by this application.

Additionally, the robot can also search grids beyond the immediate surrounding of its current grid. In this way, the one or more surrounding grids around the current grid of the robot comprise n layers of grids around the current grid of the robot, and an $x^{th}$ layer of grids surround an $x\text{-}1^{th}$ layer of grids, where $n \geq 2$ and $1 \leq x \leq n$. The first control unit 402 is further configured to, in a case that no uncleaned area is found in the $x\text{-}1^{th}$ layer of grids, control the robot to search in the $x^{th}$ layer of grids at the first set angle.

In addition to searching the five grids with coordinates (-1,0), (-1,1), (0,1), (1,1), and (1,0) in Fig. 2, it is also possible to search additional 9 outer grids or 13 outer grids.

A second control unit 403 is configured to, in a case that a first uncleaned grid is found in the one or more surrounding grids, control the robot to move to the first uncleaned grid for cleaning, and determining the first uncleaned grid as the current grid of the robot.

As shown in Fig. 2, the robot rotates clockwise 180° from the current grid to sequentially search the surrounding map grids. It stops searching when encountering uncleaned areas and moves from the current grid to the unclean grid for cleaning. After completing the cleaning, it repeats the search process.

As shown in Fig. 3, when the grid with coordinates (-1,0) is not cleaned, the robot turns left by 90°, and moves to the grid with coordinates (-1,0) for cleaning. Then, the grid with coordinates (-1,0) is determined as the current grid of the robot. When the grid with coordinates (-1,1) is not cleaned, the robot turns left by 45° and moves to the grid with coordinates (-1,1) for cleaning. Then, the grid with coordinates (-1,1) is determined as the current grid of the robot. When the grid with coordinates (0,1) is not cleaned, the robot does not turn and moves to the grid with coordinates (0,1) for cleaning. Then, the grid with coordinates (0,1) is determined as the current grid of the robot. When the grid with coordinates (1,1) is not cleaned, the robot turns right by 45° and moves to the grid with coordinates (1,1) for cleaning. Then, the grid with coordinates (1,1) is determined as the current grid of the robot. When the grid with coordinates (1,0) is not cleaned, the robot turns right by 90° and moves to the grid with coordinates (1,0) for cleaning. Then, the grid with coordinates (1,0) is determined as the current grid of the robot.

A first determination unit 404 is configured to, in a case that no uncleaned grid is found in the one or more surrounding grids, determine whether path planning termination conditions are satisfied.

To determine whether to continue path planning when no uncleaned grids are found in the one or more surrounding grids of the current grid, it is necessary to examine whether the path planning termination conditions are met. The path planning termination conditions comprise that an area covered by path planning reaches a preset value of a map area and/or the path planning cannot proceed further.

A second determination unit 405 is configured to, in a case that the path planning termination conditions are not satisfied, determine whether an accumulated rotation angle of the robot at a second set angle in the current grid reaches a full circle.

A third control unit 406 is configured to, in a case that the accumulated rotation angle of the robot at the second set angle in the current grid does not reach a full circle, control the robot to rotate by the second set angle.

A fourth control unit 407 is configured to, in a case that the accumulated rotation angle of the robot at the second set angle in the current grid reaches a full circle, control the robot to return to a position of a previous grid, and determining the previous grid as the current grid of the robot.

As shown in Figs. 2 and 3, if the path planning termination conditions are not met, the robot can be rotated by the second set angle (for example, rotated left by 90°) for search. If no uncleaned area is found, the robot can continue to rotate by the second set angle until the accumulated rotation angle of the robot at the second set angle in the current grid reaches a full circle. After the accumulated rotation angle of the robot at the second set angle in the current grid reaches a full circle and no uncleaned area is found, the robot can be returned to a position of a previous grid, and the previous grid is determined as the current grid of the robot. Then, proceed to search for uncleaned grids.

As shown in Fig. 3, the second set angle is 90°. Once the robot completes 4 rotations at the second set angle, it implies that the accumulated rotation angle of the robot at the second set angle in the current grid reaches a full circle. In this way, the second determination unit 405 comprises: a counting subunit 4051 configured to count a number of times that the robot rotates at the second set angle in the current grid; and a determination subunit 4052 configured to, based on the second set angle and the number of times the robot rotates at the second set angle, determine whether the accumulated rotation angle of the robot at the second set angle in the current grid reaches a full circle.

It should be noted that in Fig. 2, the robot can also rotate clockwise in the current grid, the second set angle can be any suitable angle, and the second set angle for each rotation can be the same or different, which is not limited by this application.

A planning termination unit 408 is configured to, in a case that the path planning termination conditions are satisfied, terminate the path planning.

As mentioned above, the path planning termination conditions comprise that an area covered by path planning reaches a preset value of a map area and/or the path planning cannot proceed further. The area covered by path planning reaching the preset value of the map area comprises that a ratio of a total area of grids cleaned by the robot to an area of a swimming pool reaches a preset value, for example, when the ratio reaches 95%, it is determined that the path planning is terminated. The situation that the path planning cannot proceed further comprises that a number of times that the robot continuously returns to a position of a previous grid reaches a preset threshold, for example, when the number of times reaching 5, when the path planning is terminated.

In a case that the path planning termination conditions comprise that a ratio of a total area of grids cleaned by the robot to an area of a swimming pool reaches a preset value, the device shown in Fig. 4 further comprises: a setting unit configured to set a status of the grids cleaned by the robot as cleaned; a counting unit configured to count the number of grids with the status set as cleaned; and a calculating unit configured to calculate a ratio of the number of cleaned grids to the total number of grids in the swimming pool. By comparing this ratio with the preset value, whether the path planning termination conditions are met can be determined.

Those skilled in the art can understand that the preset value and the number of consecutive returns can be set according to actual needs.

According to the path planning device for a swimming pool cleaning robot provided by the application, the cleaning rate of the swimming pool cleaning robot can be greatly improved, the repetition rate of cleaning is greatly reduced, and the working efficiency of the cleaning robot is improved, so that the cleaning robot is more autonomous and smarter and can generate higher economic and social benefits.

In the above-mentioned embodiments, the description of each embodiment has its own emphasis. For the parts not detailed in one embodiment, please refer to the relevant descriptions of other embodiments.

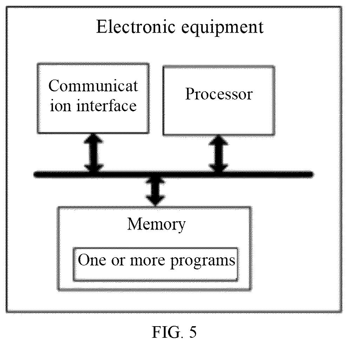

Referring to Fig. 5 which provides electronic equipment comprising a processor and a memory, the memory stores computer instructions, which, when executed by the processor, cause the processor to execute the computer instructions so as to realize the method and detailed procedures as shown in Fig. 1.

It should be understood that the above-mentioned device embodiments are only schematic, and the device disclosed in the invention can also be realized in other ways. For example, the division of units/modules described in the above embodiments is only a logical function division, and there may be another division mode in actual implementation. For example, multiple units, modules, or components may be combined, or integrated into another system, or some features may be omitted or not performed.

In addition, unless otherwise specified, each functional unit/module in each embodiment of the invention may be integrated into one unit/module, or each unit/module may exist physically alone, or more than two units/modules may be integrated together. The above integrated units/modules can be realized in the form of hardware or software program modules.

If the integrated unit/module is implemented in the form of hardware, the hardware can be a digital circuit, an analog circuit and the like. The physical realization of hardware structures includes but is not limited to transistors, memristors and so on. Unless otherwise specified, the processor or chip can be any suitable hardware processor, such as CPU, GPU, FPGA, DSP and ASIC. Unless otherwise specified, the on-chip cache, off-chip memory and memory can be any suitable magnetic storage medium or magneto-optical storage medium, for example, resistive random access memory (RRAM), dynamic random access memory (DRAM), static random-access memory (SRAM), enhanced dynamic random access memory (EDRAM), high-bandwidth memory (HBM), hybrid memory cube (HMC) and so on.

The integrated unit/module can be stored in a computer-readable memory if it is implemented in the form of a software program module and sold or used as an independent product. Based on this understanding, the essence of the technical scheme of the invention, or the part that contributes to the prior art, or all or part of this technical scheme, can be embodied in the form of a software product, which is stored in a memory and comprises several instructions to make a computer device (which can be a personal computer, a server, a network device, etc.) execute all or part of the steps of the method described in various embodiments of the disclosure. The aforementioned memory can be USB flash disk, read-only memory (ROM), random access memory (RAM), mobile hard disk, magnetic disk or optical disk and other media that can store program codes.

An embodiment of the application also provides a non-transitory computer storage medium on which a computer program is stored, and the computer program, when executed by a plurality of processors, causes the processors to execute the method and detailed procedures as shown in Fig. 1.

The embodiments of the application have been introduced in detail above. Specific examples are applied herein to illustrate the principle and implementation of the application. The above embodiments are only used to help understand the method of the application and its core ideas. The changes or deformations made by those skilled in the art based on the ideas of the application and the specific implementation and application scope of the application are within the scope of protection of the application. To sum up, the content of this specification should not be construed as a limitation of the application.

**Claims**

1. A path planning method for a swimming pool cleaning robot, comprising:

   (a) controlling the robot to search, at a first set angle, in one or more surrounding grids around a current grid of the robot;
   (b) controlling the robot to move to a first uncleaned grid for cleaning and determining the first uncleaned grid as the current grid of the robot in a case that the first uncleaned grid is found in the one or more surrounding grids, and then returning to step (a);
   (c) determining whether path planning termination conditions are satisfied in a case that no uncleaned grid is found in the one or more surrounding grids;
   (d) determining whether an accumulated rotation angle of the robot at a second set angle in the current grid reaches a full circle in a case that the path planning termination conditions are not satisfied; and
   (e) controlling the robot to rotate by the second set angle in a case that the accumulated rotation angle of the robot at the second set angle in the current grid does not reach a full circle, and then returning to step (a).

2. The path planning method according to Claim 1, further comprising:
   (f) controlling the robot to return to a position of a previous grid and determining the previous grid as the current grid of the robot in a case that the accumulated rotation angle of the robot at the second set angle in the current grid reaches a full circle, and then returning to step (a).

3. The path planning method according to Claim 1, further comprising:

(g) terminating the path planning in a case that the path planning termination conditions are satisfied.

4. The path planning method according to any one of Claims 1-3, wherein the one or more surrounding grids around the current grid of the robot comprise n layers of grids around the current grid of the robot, an $x^{th}$ layer of grids surround an $x-1^{th}$ layer of grids, where $n \geq 2$ and $1 \leq x \leq n$, and the step (a) comprises: controlling the robot to search in the $x^{th}$ layer of grids at the first set angle in a case that no uncleaned area is found in the $x-1^{th}$ layer of grids.

5. The path planning method according to any one of Claims 1-3, wherein the step (d) comprises:

   counting a number of times that the robot rotates at the second set angle in the current grid; and determining whether the accumulated rotation angle of the robot at the second set angle in the current grid reaches a full circle, based on the second set angle and the number of times the robot rotates at the second set angle.

6. The path planning method according to any one of Claims 1-3, wherein the path planning termination conditions comprise that a ratio of a total area of grids cleaned by the robot to an area of a swimming pool reaches a preset value, and the method further comprises:

   setting a status of grids cleaned by the robot as cleaned;
   counting a number of grids with the status set as cleaned; and
   calculating a ratio of the number of cleaned grids to a total number of grids in the swimming pool.

7. The path planning method according to any one of Claims 1-3, wherein the path planning termination conditions comprise that a number of times that the robot continuously returns to a position of a previous grid reaches a preset threshold.

8. The path planning method according to any one of Claims 1-3, further comprising:
   acquiring an electronic map of the swimming pool in a grid form, wherein the electronic map comprises a plurality of grids.

9. The path planning method according to any one of Claims 1-3, wherein the robot rotates by the first set angle or the second set angle clockwise or counterclockwise.

10. A path planning device for a swimming pool cleaning robot, comprising:

   a first control unit configured to control the robot to search, at a first set angle, in one or more surrounding grids around a current grid of the robot;
   a second control unit configured to control the robot to move to a first uncleaned grid for cleaning and determine the first uncleaned grid as the current grid of the robot in a case that the first uncleaned grid is found in the one or more surrounding grids;
   a first determination unit configured to determine whether path planning termination conditions are satisfied in a case that no uncleaned grid is found in the one or more surrounding grids;
   a second determination unit configured to determine whether an accumulated rotation angle of the robot at a second set angle in the current grid reaches a full circle in a case that the path planning termination conditions are not satisfied; and
   a third control unit configured to control the robot to rotate by the second set angle in a case that the accumulated rotation angle of the robot at the second set angle in the current grid does not reach a full circle.

11. An electronic equipment, comprising:

   a processor; and
   a memory having stored thereon computer instructions which, when executed by the processor, cause the processor to execute the method according to any one of Claims 1-9.

12. A non-transitory computer storage medium having stored thereon a computer program which, when executed by processors, causes the processors to execute the method according to any one of Claims 1-9.

S101

acquiring an electronic map of the swimming pool in a grid form, wherein the electronic map comprises a plurality of grids

S102

controlling the robot to search, at a first set angle, In one or more surrounding grids around a current grid of the robot

S103

controlling the robot to move to a first uncleaned grid for cleaning and determining the first uncleaned grid as the current grid of the robot in a case that the first uncleaned grid is found in the one or more surrounding grids, and then returning to step 102

S104

determining whether path planning termination conditions are satisfied in a case that no uncleaned grid is found in the one or more surrounding grids

S105

determining whether an accumulated rotation angle of the robot at a second set angle in the current grid reaches a full circle in a case that the path planning termination conditions are not satisfied

S106

controlling the robot to rotate by the second set angle in a case that the accumulated rotation angle of the robot at the second set angle in the current grid does not reach a full circle, and then returning to step 102

S107

controlling the robot to return to a position of the previous grid and determining a previous grid as the current grid of the robot in a case that the accumulated rotation angle of the robot at the second set angle in the current grid reaches a full circle, and then returning to step 102

S108

terminating the path planning in a case that the path planning termination conditions are satisfied

FIG. 1

FIG. 2

Start

P(-1,0)=0? —Y→ Turn left by 90° → One step forward

N

P(-1,1)=0? —Y→ Turn left by 45°

N

P(0,1)=0? —Y→ No turning

N

P(1,1)=0? —Y→ Turn right by 45°

N

P(1,0)=0? —Y→ Turn right by 90°

N

Cleaning completed? —Y→ End

N

Accumulated number of left turns n>3? —Y→ Back to the previous position, n=0

N

Turn left by 90° Increase the number of left turns by 1

Fig. 3

acquisition unit 401

first control unit 402

second control unit 403

first determination unit 404

second determination unit 405

third control unit 406

fourth control unit 407

planning termination unit 408

FIG. 4

Electronic equipment

Communicat
ion interface

Processor

Memory

One or more programs

FIG. 5

<table>
<tr><td colspan="2" align="center">**INTERNATIONAL SEARCH REPORT**</td><td colspan="2">International application No.<br><br>**PCT/CN2023/100755**</td></tr>
</table>

**A.  CLASSIFICATION OF SUBJECT MATTER**

G05D1/02(2020.01)i

According to International Patent Classification (IPC) or to both national classification and IPC

**B.  FIELDS SEARCHED**

Minimum documentation searched (classification system followed by classification symbols)

IPC:G05D

Documentation searched other than minimum documentation to the extent that such documents are included in the fields searched

Electronic data base consulted during the international search (name of data base and, where practicable, search terms used)

CNABS, CNTXT, ENTXTC, VEN: 泳池, 清洁, 清扫, 率, 角度, 路径规划, 栅格, 重复, swimming pool, clean, sweep, ratio, route, plan, path, programming, angle, grid, repeat+

**C.  DOCUMENTS CONSIDERED TO BE RELEVANT**

| Category* | Citation of document, with indication, where appropriate, of the relevant passages | Relevant to claim No. |
|---|---|---|
| PX | CN 114895691 A (DEEPINFAR (TIANJIN) UNDERWATER INTELLIGENT TECHNOLOGY CO., LTD.) 12 August 2022 (2022-08-12)<br>     claims 1-12 | 1-12 |
| A | CN 114721388 A (SHENZHEN BEATLES INTELLIGENT CO., LTD.) 08 July 2022 (2022-07-08)<br>     entire document | 1-12 |
| A | CN 107895374 A (SHENZHEN 3IROBOTIX CO., LTD.) 10 April 2018 (2018-04-10)<br>     entire document | 1-12 |
| A | CN 110456789 A (CHINA UNIVERSITY OF MINING AND TECHNOLOGY) 15 November 2019 (2019-11-15)<br>     entire document | 1-12 |
| A | US 2017344007 A1 (KOREA UNIVERSITY RESEARCH AND BUSINESS FOUNDATION) 30 November 2017 (2017-11-30)<br>     entire document | 1-12 |

☐ Further documents are listed in the continuation of Box C.   ☑ See patent family annex.

| | |
|---|---|
| * Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **04 October 2023** | **04 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100755**

| Patent document cited in search report | | | Publication date (day/month/year) | Patent family member(s) | | | Publication date (day/month/year) |
|---|---|---|---|---|---|---|---|
| CN | 114895691 | A | 12 August 2022 | None | | | |
| CN | 114721388 | A | 08 July 2022 | None | | | |
| CN | 107895374 | A | 10 April 2018 | None | | | |
| CN | 110456789 | A | 15 November 2019 | None | | | |
| US | 2017344007 | A1 | 30 November 2017 | US | 10394244 | B2 | 27 August 2019 |

Form PCT/ISA/210 (patent family annex) (July 2022)